# EUROPEAN PATENT SPECIFICATION

(11) **EP 2 449 549 B1**
(45) Date of publication and mention of the grant of the patent: **05.06.2013**
(21) Application number: 10735190.0
(22) Date of filing: 29.06.2010
(51) Int. Cl.: G09F 19/14, G09F 19/16, G09F 13/24

(54) **A DISPLAY STRUCTURE**
ANZEIGESTRUKTUR
STRUCTURE D'AFFICHAGE

(30) Priority: 29.06.2009 GB 0911190
(43) Date of publication of application: 09.05.2012
(73) Proprietor: Hein, Oliver, 80639 München (DE)
(72) Inventor: Hein, Oliver, 80639 München (DE)
(74) Representative: Hirsz, Christopher Stanislaw
(86) International application number: PCT/EP2010/003932
(87) International publication number: WO 2011/000545

(56) References cited:
- JP-A- 2002 268 598
- JP-A- 2004 333 848
- US-A1- 2008 291 152

## Description

### Field of the Invention

This invention relates to a display, particularly, to a double-sided display structure that can be used to show the same or different still and/or moving images on two sides thereof, for example to such a display structure that can be used as an advertising sign.

### Background of the Invention

Advertising signs are known in many different shapes, sizes and designs. A common design hitherto has been a sign having a multiplicity of square or triangular shaped prisms, which are arranged to rotate about their axes mounted generally side-by-side with their axes vertically. Each side of the prisms has a vertical strip of a poster or other image mounted on them, and the rotation is synchronized so that all the strips for one image are shown at once to make up a complete image. Thus, for triangular prisms, there can be three different images, which change periodically, as the prisms rotate. For square prisms there can be four different images, with both sides of the sign being visible and displaying different images.

Another type of advertising sign is one that is formed directly of a matrix of light emitting devices, whether of one colour or of several or many different colours. If the matrix is of light sources of a single colour, then they can be controlled to be turned on and off in particular patterns to provide a monochrome advertisement. If there are a large number, particularly if of different colours, then large, self-luminescent advertisements can be produced by programming the controller that controls the switching of the light sources on and off. As light emitting diodes have become available, especially in several colours, this has become a preferred form of the light source for such matrices. Such electronic signs can display either still or moving images. Such signs are not, however, generally double-sided unless two independent such signs are mounted back-to- back.

US 2008/291152 discloses a liquid crystal display apparatus including a display panel, first and second backlights which illuminate the display panel, wherein light from the first backlight is emitted with an inclination of a predetermined angle in a first direction to a plane which is perpendicular to a display surface of the display panel, and light from the second backlight is emitted with an inclination of the predetermined angle to the plane, the first direction and the second direction being symmetric to each other with regard to the plane. JP 2002 268598 discloses an image display apparatus in which not only different display images can be switched but an erect image and an inverted image can be both displayed at a time. JP 2004 333848 discloses an image display for displaying new images by allowing screen information to be changed, depending on the direction of passer-by's eyes, without using mechanical or movable components.

### Brief Summary of the Invention

The present invention therefore seeks to provide a display structure that provides a double-sided display of the same or different still and/or moving images.

Accordingly, in a first aspect, the invention provides a double-sided display structure comprising a light transmitting element comprising a light transmitting material, the light transmitting element having a pair of opposed light receiving faces and a pair of opposed light emitting faces substantially orthogonally disposed to the light receiving faces, a light reflecting layer disposed at an oblique angle to the light receiving faces and the light emitting faces, and a pair of light-emitting displays for displaying the same or different still and/or moving images and being mounted such that an image from a respective light-emitting display is emitted into a respective light receiving face and is transmitted through the light transmitting element to be reflected by the reflecting layer to a respective light emitting face, whereby the images received at the pair of opposed light receiving faces are visible to observers through the pair of opposed light emitting faces of the display structure.

In a preferred embodiment, the light transmitting material has a first refractive index and the light reflecting layer has a second refractive index different to the first refractive index, and the difference in the first and second refractive indices and the oblique angle are sufficient to cause the images to be substantially reflected by the light reflecting layer.

Preferably, the light transmitting material is a first fluid medium and the light reflecting layer includes a second fluid medium, different to the first fluid medium.

In one embodiment, the first fluid medium comprises a liquid, such as water or oil, for example silicone oil, within a tank formed of a solid, light transmitting material, such as glass or plastics material.

The second fluid medium preferably comprises gas, such as air, enclosed within a substantially planar element formed of a pair of walls sealed together at their periphery and formed of solid, light transmitting material, such as glass or plastics material.

In one embodiment, the tank is substantially cylindrical with a pair of end faces forming the pair of opposed light emitting faces, and opposite portions of the curved periphery form the pair of opposed light receiving faces, the planar element extending within the tank at an oblique angle to both the end faces of the tank and the opposed curved portions of the periphery.

Preferably, the planar element is provided with a pair of opposed extensions extending from opposite ends of the planar element at an obtuse angle thereto so as to contact the opposed end faces of the tank and to thereby retain the planar element in position within the tank.

In another embodiment, the tank is substantially cubical or cuboidal with a pair of end faces forming the pair of opposed light emitting faces, and a pair of side faces forming the pair of opposed light receiving faces, the planar element extending within the tank at an oblique angle to both the end faces and the side faces of the tank.

Preferably, the light transmitting element is formed of a pair of tanks of substantially prism-like shape, each having an oblique face substantially adjacent each other with a layer of air therebetween providing the light reflecting layer.

Alternatively, the light transmitting element may be formed of a solid light transmitting material and is formed in two parts of substantially prism-like shape, each having an oblique face substantially adjacent each other with a layer of air therebetween providing the light reflecting layer.

The two parts are preferably formed as right-angled triangular prisms.

The double-sided display structure preferably further comprises a mount for mounting the pair of light-emitting displays adjacent a respective light receiving face, the mount being generally opaque so as to hide the light-emitting displays and the light receiving faces of the light transmitting element.

The mount may comprise, in one embodiment, a pair of spaced mounting members, each member having one of the light-emitting displays and one of the light receiving faces therein, whereby the light transmitting element extends between the spaced mounting elements, such that the light emitting faces are viewable by observers between the spaced mounting members.

Alternatively, the mount may comprise an annular mounting member wherein the light-emitting displays and the light receiving faces are hidden therein, but the light emitting faces of the light transmitting element are visible through the center of the annular mounting member, such that the light emitting faces are viewable by observers.

Preferably, the images displayed by the pair of light emitting displays are different and one such image is visible to an observer looking at one of the light emitting faces and the other such image is visible to an observer looking at the other of the light emitting faces.

The double-sided display structure may comprise a plurality of said light transmitting elements mounted vertically next to each other, with a plurality of pairs of light emitting displays arranged adjacent the light receiving faces of the plurality of light transmitting elements.

The double-sided display structure may further comprise a light assembly arranged to shine light into the light transmitting element.

According to a second aspect, the invention provides an advertising sign comprising a double-sided display structure as described above.

### Brief Description of the Drawings

Embodiments of the invention will now be more fully described, by way of example, with reference to the drawings, of which:
FIG. 1 shows a general perspective view of an advertising sign incorporating a double-sided display structure according to one embodiment of the present invention;
FIG. 2 shows a schematic part-exploded cross-sectional perspective view of the advertising sign of FIG. 1;
FIG. 3 shows a schematic part cross-sectional plan view of the advertising sign of FIG. 1;
FIG. 4 shows an exploded perspective view of the advertising sign of FIG. 2 without the mount;
FIG. 5 shows a general perspective view of an advertising sign incorporating a double-sided display structure according to a second embodiment of the present invention;
FIG. 6 shows a schematic exploded perspective view of the advertising sign of FIG. 5 without the mount
FIG. 7 shows a schematic part-exploded cross-sectional perspective view of a display structure according to a third embodiment of the invention;
FIG. 8 shows a plan view of the display structure of FIG. 7;
FIG. 9 shows a schematic part-exploded cross-sectional perspective view of a display structure according to a fourth embodiment of the invention;
FIG. 10 shows a schematic part-exploded cross-sectional perspective view of a display structure according to a further embodiment of the invention;
FIG. 11 shows a side view of the display structure of FIG. 10; and
FIG. 12 shows a cross-sectional plan view of the display structure of FIG. 10.

### Detailed Description of the Drawings

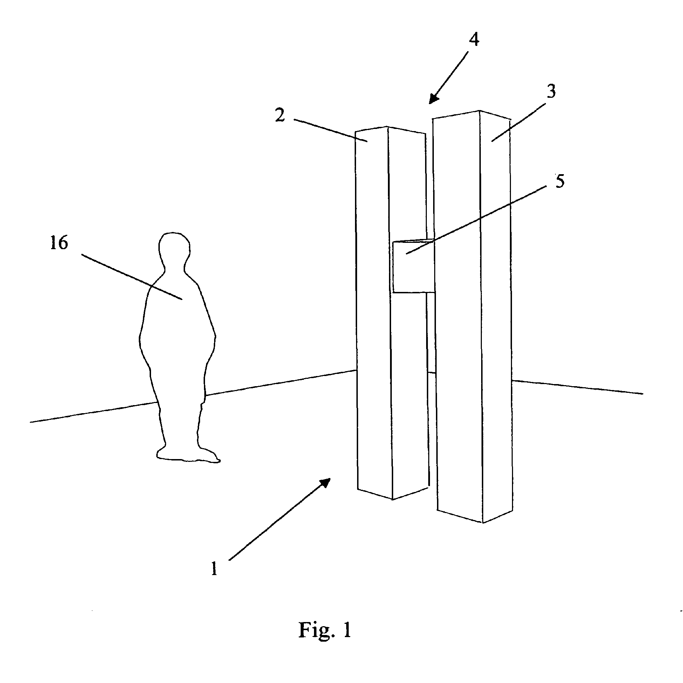

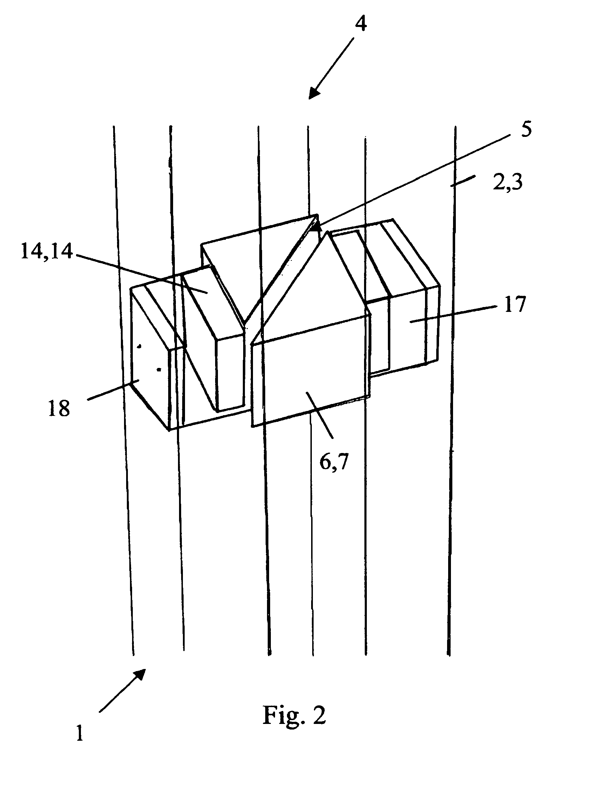

Thus, as best shown in Figures 1 and 2, an advertising sign 1 according to a first embodiment of the invention incorporates a double sided display structure including pair of mounting members 2, 3, which together form a mount 4 of the sign 1. The mounting members 2, 3 are generally opaque and may be formed, for example, from wood (for example Oak) or plastics material. They are arranged to be mounted generally vertically in the ground, either directly or in a base.

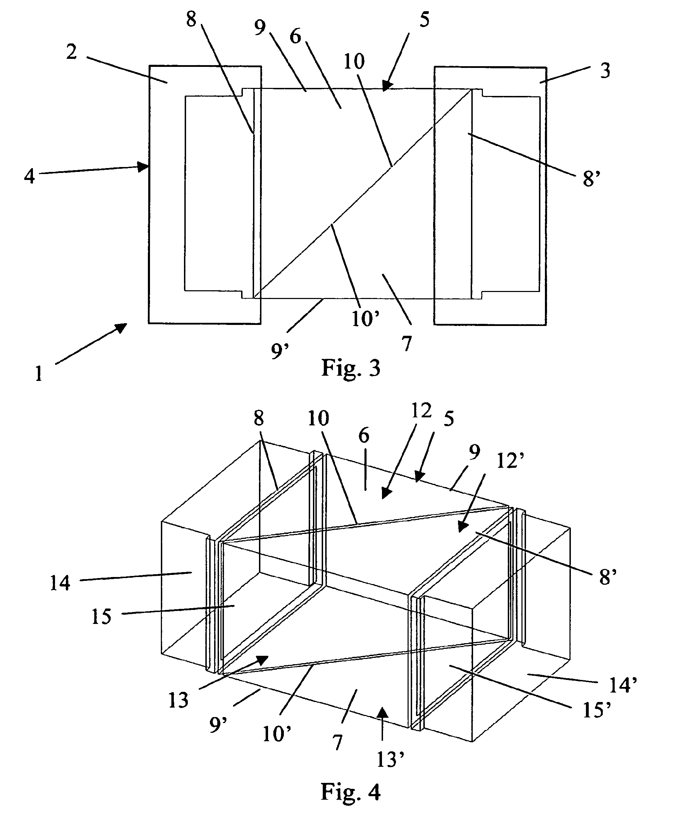

A generally cuboidal transparent block 5 is mounted between the pair of mounting elements 2, 3. The block 5 (as also shown in FIGs 3 and 4) is made of a pair of triangular prisms 6, 7 made of glass or other transparent material such as Perspex or other plastic material, such as acrylic. Each prism 6, 7 is a right-angled triangular prism having a first 8, 8' and a second 9, 9' face defining a right angle between them and a hypotenuse face 10,10' extending therebetween. Each prism 6, 7 also has a top 12, 12' and a bottom 13, 13' triangular face. The prisms 6, 7 are mounted in the mounting elements 2, 3 such that their hypotenuse faces 10,10' are in contact with each other, with the two hypotenuse faces 10,10' extending generally vertically from one corner to a diagonally opposite corner of the block 5. Preferably, as shown, the first face 8, 8' of each prism 6, 7 is enclosed within a respective mounting member 2, 3, such that the second faces 9,9' of the prisms 6, 7 extend between the two mounting elements 2, 3 to be visible to an observer 16.

As best shown in FIGs. 2 to 4, the advertising sign 1 also comprises a pair of light-emitting displays 14, 14', each having a screen 15, 15' for displaying an image, mounted, respectively, within the mounting members 2, 3 such that respective screens 14, 14' thereof are adjacent to or in contact with respective first faces 8, 8' of the prisms 6, 7. Thus, the displays 14, 14' are also enclosed within the respective mounting members 2, 3, whereby the images are emitted from the screens 15, 15' into the respective prisms 6, 7 through their first faces 8, 8'. The images are then internally reflected within each prism 6, 7 and pass through the second faces 9, 9' thereof so as to be visible to observers of the second faces of the prisms.

As shown in FIG. 2, the displays, having video screens, may be mounted within hollowed out spaces 17 within the mounting members 2, 3, which are closed off by lids 18. The mounting members may be, as illustrated in FIG. 1, railway sleepers or similar wooden members, and the lids may then also be wooden. Furthermore, as shown in FIG. 2, the prisms may extend between the mounting members at an angle, rather than perpendicularly between them.

The light-emitting displays 14, 14' are preferably similar to portable electronic displays of the well known type that display either still images, or moving images, which may be stored either in internal memory of the device, for example in MP4 format, on an external memory and coupled via a wire or wirelessly to the device, or be stored on a storage medium, for example a DVD or CD ROM and played by the device. It will be appreciated that the method whereby the image is displayed on the screen of each device is immaterial and any suitable method will suffice. In a preferred embodiment, the devices are portable MP4 players that can display either still or moving images, and can be programmed to change the images displayed either in a predetermined or in random sequence. The screens, can be either LCD or LED or any other suitable light-emitting display which generates an image that can be seen through the prisms.

Thus, it will be apparent that, in the above-described embodiment, the displays and the first faces of the prisms are enclosed within the mounting members and are not visible to an observer. An observer can only see a second face of a prism and there sees only an image from one of the diplays which has been reflected from the hypotenuse face of that prism. However, when an observer moves to look at the other second face of the other prism, only the other image from the other display is visible, and the two images thus appear to be visible from the two sides of the block 5 without any visible means of their generation.

Since each of the two images is independently generated, and is visible from an opposite face of the block 5, the advertising sign can be used to provide two different images and, if the sign is positioned, for example, at a doorway which serves as an entrance and an exit to a building, the sign could display a first image appropriate for someone entering the building on one side and an image appropriate to someone leaving the building on the other side.

Nevertheless, although the scale of the above described embodiment is shown as being fairly large, with the mounting members being firmly affixed in the ground so that the images are visible at about eye level of an observer, it will be appreciated that other embodiments could be made either smaller or larger. For example, it is envisaged that the device could be made of small acrylic prisms with small light emitting displays arranged on opposing faces, so that images, still or moving, could be displayed through the other opposed faces. Such a device could be made portable, event to the extent of being small enough to be attached to a key ring, for example to display souvenir images of a particular location, with or without advertising images displayed thereon. Such a souvenir image display could thus be made relatively cheaply, if the light emitting displays were to be made cheaply, for example displaying a small selection of images, such a set of slides

Alternatively, the structure could be made even larger that originally described, by mounting several blocks made up of pairs of prisms, with associated displays, vertically next to each other in the mount, with the mounting members being elongate and extending vertically, so that a number of images can be seen from each side of the sign.

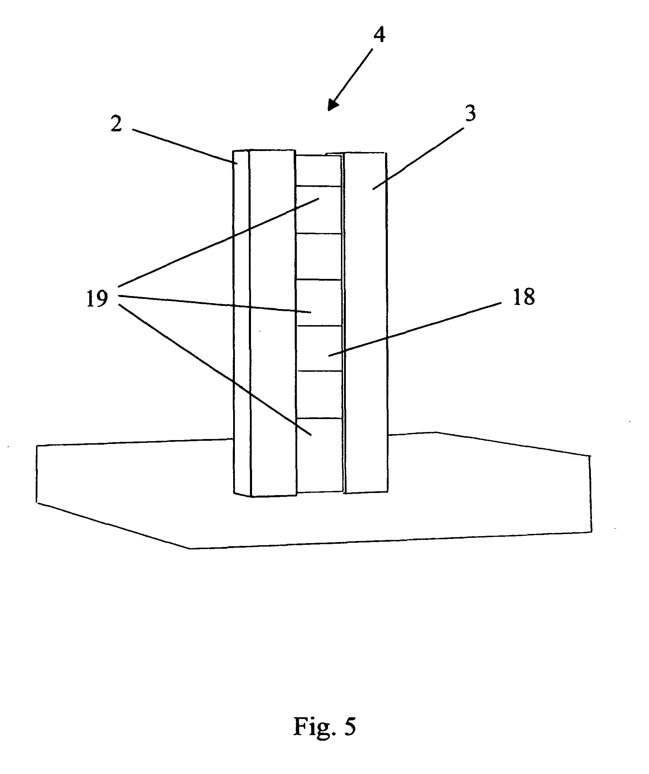

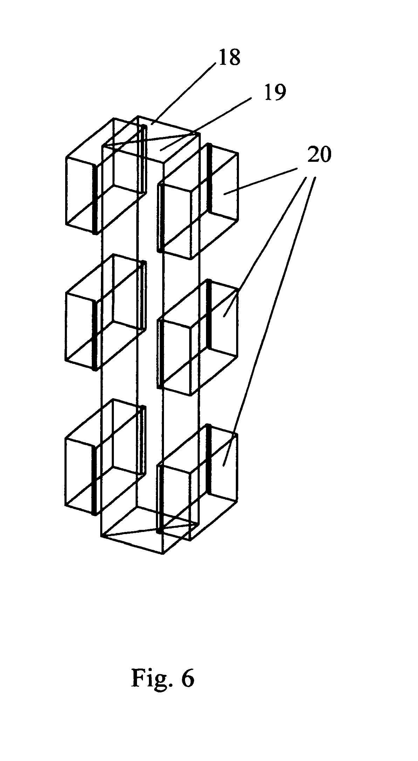

In another embodiment, as shown schematically in FIGs. 5 and 6, the prisms could be made of glass tanks 18, 19 filled with transparent liquid, such as water, or suitable oil, such as silicone oil, which may be coloured. In such a case, the top triangular face of the prisms may be formed either by the surface of the liquid or by a lid mounted on the glass tank. Furthermore, the glass tanks 18, 19 may extend vertically so that a plurality of displays 20 are mounted vertically next to each other such that their respective screens are adjacent to or in contact with a respective first face of a prism. Thus, a number of images would be visible in a column through the faces of the tanks 18, 19 as shown.

If desired, depending on the images to be displayed and the effects that may be required, a lighting assembly may also be provided to shine light onto the top and/or bottom faces of the prisms.

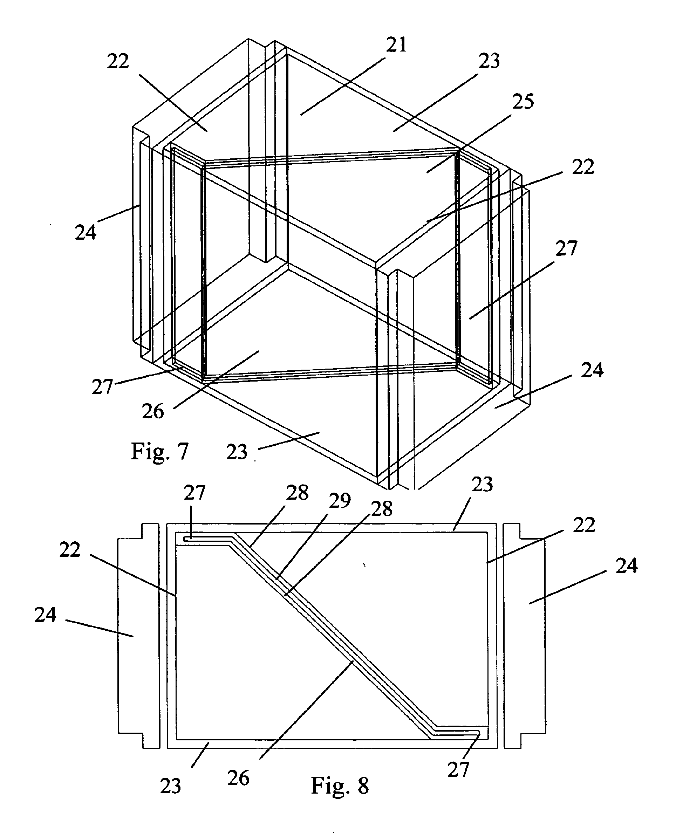

A further embodiment of the invention will now be described with reference to FIGs. 7 and 8 of the drawings. In this case, a cuboidal tank 21 is provided with ends faces 22, and side faces 23. The tank 21 is filled with a liquid, such as water, or oil (for example a silicone oil). Light emitting displays 24 are arranged adjacent the end faces 22 so as to emit their respective images into the tank 21 through the end, light receiving faces. Within the tank 21 there is positioned a light interface 25 having a different refractive index to that of the liquid. In this case, the light interface 25 comprises a planar element 26 having extensions 27 at each end. The extensions 27 are at an obtuse angle to the planar element 26 and are configured to contact the rest against the side faces 23 so as to position the planar element 26 diagonally across the tank at an oblique angle to the end and side faces. The planar element 26, in this case, is formed of a pair of glass or plastic sheets 28 having a layer 29 of gas, such as air, enclosed within them. The gas has a refractive index different to that of the liquid within the tank, and the difference in the refractive indices, together with the angle at which the image is incident on the planar element 26 causes the image light to be reflected by the planar element towards that side faces 23, where they can be viewed by observers.

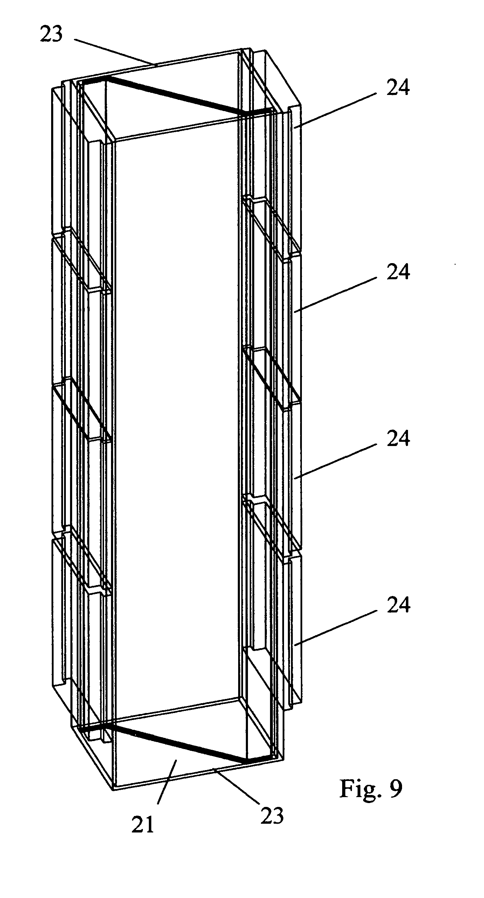

As can be seen in FIG. 9, the tank 21 can be extended vertically so as to allow several pairs of light emitting displays 24 to be mounted vertically adjacent to each other on opposed end faces thereof, similarly to the embodiment described above with reference to FIG. 6. Thus, a number of images would be visible in a column through the side faces 23 of the tank 21.

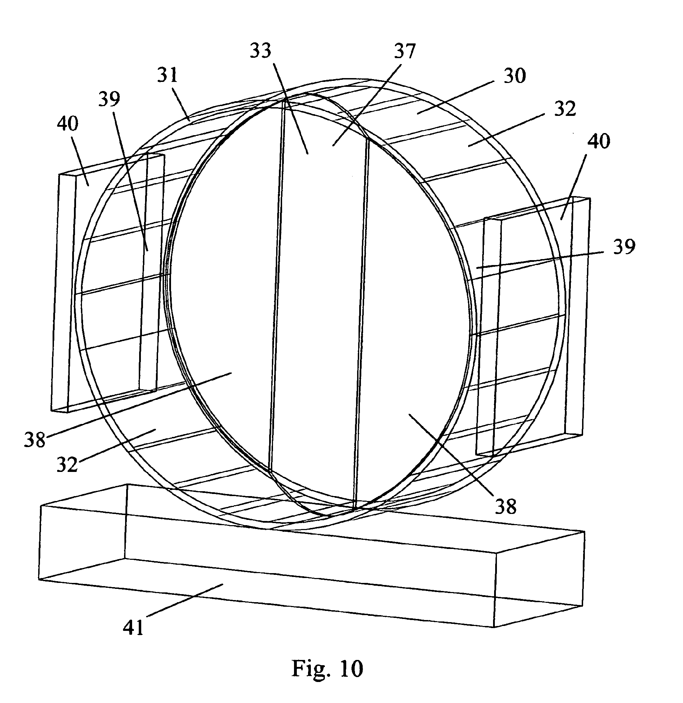

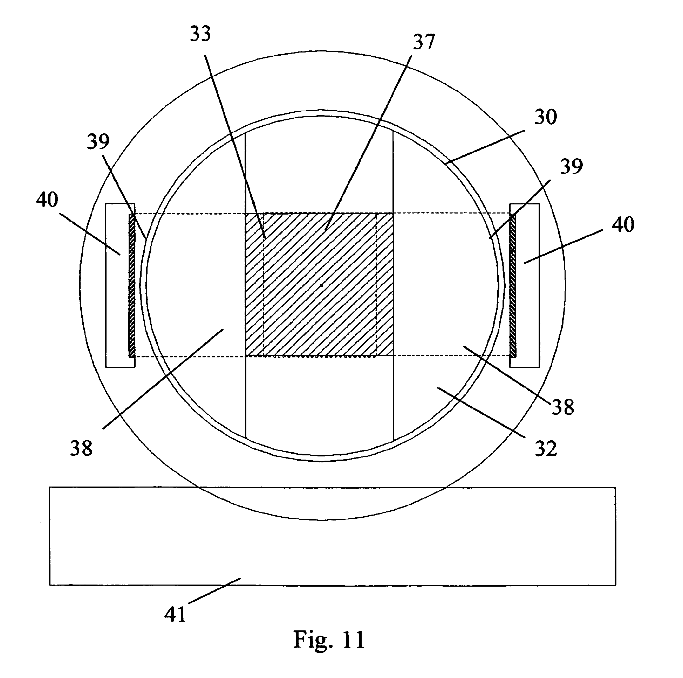

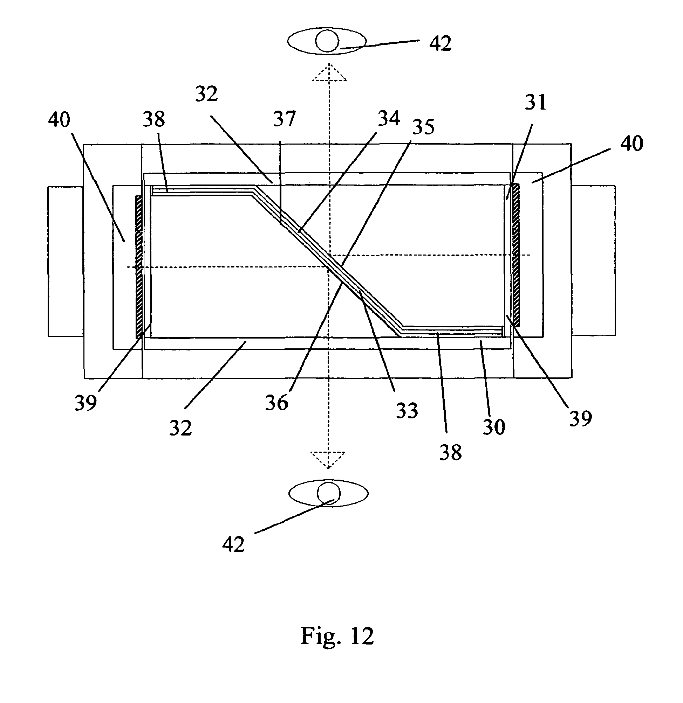

A still further embodiment of a display structure can be seen in FIGs. 10 to 12. In this case, there is provided a cylindrical tank 30 having a circular periphery 31 and a pair of end faces 32. As before the tank 30 is filled with a liquid, such as a silicone oil and a light reflecting layer 33 is provided within the tank 30. The light reflecting layer 33 is formed of a layer 34 of air sandwiched between and enclosed by a pair of sheets 35, 36 of acrylic plastic. The light reflecting layer 33 includes a planar element 37 having extensions 38 arranged to extend at an obtuse angle thereto so as to be positioned adjacent the end faces 32 to maintain the planar element 37 at an oblique angle to the end faces 32 and to diametrically opposed portions 39 of the periphery 31, adjacent to which are mounted a pair of light emitting displays 40. The tank 30 is mounted on a support 41. As best shown in FIG. 11, the tank is surrounded by a mount 43 for mounting the light emitting displays 40 against the diametrically opposed portions 39 of the periphery 31 and to hide the light emitting displays 40 and the periphery 31 of the tank 30 from view by an observer 42, so that only the end faces 32 are visible to observers 42, whereby the observers 42 can view the images reflected by the reflecting layer 33 to the end faces 32 in the manner described above, as shown in FIG. 12.

It will be appreciated that although only a few particular embodiments of the invention have been described in detail, various modifications and improvements can be made by a person skilled in the art without departing from the scope of the present invention. For example, it will be apparent that it does not matter what media are used for the light transmitting element, provided that the light from the light emitting displays can pass through the medium to the reflecting layer, which, again, can be of any material, including a double sided reflecting material, such as a mirror, if desired, although a layer of a medium having a different refractive index to that of the material forming the light transmitting element is preferable. The shape of the light transmitting element may be any desired shape, for example cubic, cuboidal or cylindrical, as described, or any other desired shape. Furthermore, as explained, the scale of the display structure can be anything from portable in one hand, or smaller, to large fixed structures, and can be used to display images, such as souvenir images, which can be still or moving, or advertising images, whether commercial advertising , or information signs or images. Finally, as explained, the light emitting element can be solid or liquid and can be formed of two separate parts with a layer of air therebetween, or as a single element with a layer of air or other appropriate material arranged within the element to provide the reflecting layer.

## Claims

1. A double-sided display structure comprising:
a light transmitting element (5) comprising a light transmitting material, the light transmitting element (5) having a pair of opposed light receiving faces (8, 8') and a pair of opposed light emitting faces (9, 9') substantially orthogonally disposed to the light receiving faces (8,8');
a light reflecting layer (10, 10') disposed at an oblique angle to the light receiving faces (8, 8') and the light emitting faces (9, 9') **characterized by**;
a pair of light-emitting displays (14, 14') for displaying the same or different still and/or moving images and being mounted such that an image from a respective light-emitting display (14, 14') is emitted into a respective light receiving face (8, 8') and is transmitted through the light transmitting element (5) to be reflected by the reflecting layer (10, 10') to a respective light emitting face (9,9'),
whereby the images received at the pair of opposed light receiving faces (8, 8') are visible to observers through the pair of opposed light emitting faces (9, 9') of the display structure.

2. A double-sided display structure according to claim 1, wherein the light transmitting material (5) has a first refractive index and the light reflecting layer (10, 10') has a second refractive index different to the first refractive index, and the difference in the first and second refractive indices and the oblique angle are sufficient to cause the images to be substantially reflected by the light reflecting layer (10, 10').

3. A double-sided display structure according to claim 2, wherein the light transmitting material (5) is a first fluid medium and the light reflecting layer (10, 10') includes a second fluid medium, different to the first fluid medium, optionally wherein the first fluid medium comprises a liquid, such as water or oil, for example silicone oil, within a tank (18, 19) formed of a solid, light transmitting material, such as glass or plastics material, and further optionally wherein the second fluid medium comprises gas, such as air, enclosed within a substantially planar element formed of a pair of walls sealed together at their periphery and formed of solid, light transmitting material, such as glass or plastics material.

4. A double-sided display structure according to claim 3, wherein the tank (30) is substantially cylindrical with a pair of end faces (32) forming the pair of opposed light emitting faces, and opposite portions of the curved periphery form the pair of opposed light receiving faces, the planar element (37) extending within the tank (30) at an oblique angle to both the end faces (32) of the tank and the opposed curved portions of the periphery.

5. A double-sided display structure according to claim 4 wherein the planar element (37) is provided with a pair of opposed extensions (38) extending from opposite ends of the planar element (37) at an obtuse angle thereto so as to contact the opposed end faces of the tank and to thereby retain the planar element (37) in position within the tank (30).

6. A double-sided display structure according to claim 3, wherein the tank (21) is substantially cubical or cuboidal with a pair of end faces (22) forming the pair of light a pair of the pair of opposed light emitting faces, and a pair of side faces (23) forming the pair of opposed light receiving faces, the planar element (26) extending within the tank (21) at an oblique angle to both the end faces and the side faces of the tank (21).

7. A double-sided display structure according to claim 3, wherein the light element of a pair of prism-like transmitting element is formed of a pair of tanks (18, 19) of substantially prism-like shape, each having an oblique face substantially adjacent each other with a layer of air therebetween providing the light reflecting layer.

8. A double-sided display structure according to claim 2, wherein the light transmitting element (5) is formed of a solid light transmitting material and is formed in two parts of substantially prism-like shape, each having an oblique face substantially adjacent each other with a layer of air therebetween providing the light reflecting layer, optionally wherein the two parts are formed as right-angled triangular prisms.

9. A double-sided displays structure according to any preceding claim, further comprising a mount (4) for mounting the pair of light-emitting displays (14, 14') adjacent a respective light receiving face, the mount (4) being generally opaque so as to hide the light-emitting displays (14, 14') and the light receiving faces (8, 8') of the light transmitting element.

10. A double-sided display structure according to claim 9, wherein the mount (4) comprises a pair of spaced mounting members (2, 3), each member having one of the light-emitting displays (14, 14') and one of the light receiving faces (8, 8') therein, whereby the light transmitting element (5) extends between the spaced mounting elements (2, 3), such that the light emitting faces (8, 8') are viewable by observers between the spaced mounting members.

11. A double-sided display structure according to claim 9, wherein the mount comprises an annular mounting member (23) wherein the light-emitting displays (40) and the light receiving faces are hidden therein, but the light emitting faces of the light transmitting element are visible through the center of the annular mounting member, such that the light emitting faces are viewable by observers.

12. A double-sided display structure according to any preceding claim, wherein the images displayed by the pair of light emitting displays (14, 14') are different and one such image is visible to an observer looking at one of the light emitting faces (9, 9') and the other such image is visible to an observer looking at the other of the light emitting faces.

13. A double-sided display structure according to any preceding claim, comprising a plurality of said light transmitting elements (18, 19) mounted vertically next to each other, with a plurality of pairs of light emitting displays (20) arranged adjacent the light receiving faces of the plurality of light transmitting elements.

14. A double-sided display structure according to any preceding claim, further comprising a light assembly arranged to shine light into the light transmitting element.

15. An advertising sign comprising a double-sided display structure according to any preceding claim.

## Patentansprüche

1. Doppelseitige Anzeige, die Folgendes umfasst:
ein lichtdurchlässiges Element (5), das ein lichtdurchlässiges Material umfasst, wobei das lichtdurchlässige Element (5) ein Paar gegenüberliegende lichtempfangende Flächen (8, 8') und ein Paar gegenüberliegende lichtemittierende Flächen (9, 9'), das im Wesentlichen orthogonal zu den lichtempfangenden Flächen (8, 8') angeordnet ist, aufweist;
eine lichtreflektierende Schicht (10, 10'), die in einem schiefen Winkel zu den lichtempfangenden Flächen (8, 8') und den lichtemittierenden Flächen (9, 9') angeordnet ist; **gekennzeichnet durch**
ein Paar lichtemittierende Anzeigen (14, 14') zum Anzeigen derselben oder verschiedener stiller und/oder bewegter Bilder, das so angebracht ist, dass ein Bild von einer jeweiligen lichtemittierenden Anzeige (14, 14') in eine jeweilige lichtempfangende Aufnahmefläche (8, 8') emittiert und **durch** das lichtdurchlässige Element (5) übertragen wird, um von der reflektierenden Schicht (10, 10') zu einer jeweiligen lichtemittierenden Fläche (9, 9') reflektiert zu werden.
wobei die Bilder, die bei dem Paar gegenüberliegender lichtempfangender Flächen (8, 8') empfangenen werden, für Betrachter **durch** das Paar gegenüberliegender lichtemittierender Flächen (9, 9') der Anzeigekonstruktion sichtbar sind.

2. Doppelseitige Anzeigekonstruktion nach Anspruch 1, wobei das lichtdurchlässige Material (15) einen ersten Brechungsindex und die lichtreflektierende Schicht (10, 10') einen zweiten Brechungsindex aufweist, der sich von dem ersten Brechungsindex unterscheidet, und die Differenz zwischen dem ersten und zweiten Brechungsindex und der schiefe Winkel für eine wesentliche Reflexion der Bilder von der lichtreflektierenden Schicht (10, 10') ausreichen.

3. Doppelseitige Anzeigekonstruktion nach Anspruch 2, wobei das lichtdurchlässige Material (5) ein erstes Fluidmedium ist und die lichtreflektierende Schicht (10, 10') ein zweites Fluidmedium umfasst, das sich von dem ersten Fluidmedium unterscheidet, wobei das erste Fluidmedium wahlweise eine Flüssigkeit, wie z. B. Wasser oder Öl, beispielsweise Silikonöl, umfasst, das sich in einem Behälter (18, 19) befindet, der aus einem festen, lichtdurchlässigen Material, wie z. B. Glas oder Kunststoffmaterial, gebildet ist, und wobei das zweite Fluidmedium ferner wahlweise ein Gas, wie z. B. Luft, umfasst, das in einem im wesentlichen planaren Element eingeschlossen ist, das aus einem Paar Wände gebildet ist, die an ihrem Umfang abgedichtet und aus einem festen, lichtdurchlässigen Material, wie z. B. Glas oder Kunststoffmaterial, gebildet sind.

4. Doppelseitige Anzeigekonstruktion nach Anspruch 3, wobei der Behälter (30) im Wesentlichen zylindrisch mit einem Paar von Endflächen (32) gebildet ist, die das Paar von gegenüberliegenden lichtemittierenden Flächen bilden, und gegenüberliegende Abschnitte des gekrümmten Umfangs das Paar gegenüberliegende lichtempfangende Flächen bilden, wobei sich das planare Element (37) innerhalb des Behälters (30) in einem schiefen Winkel sowohl zu den Endflächen (32) des Behälters als auch zu den gegenüberliegenden gekrümmten Abschnitten des Umfangs erstreckt.

5. Doppelseitige Anzeigekonstruktion nach Anspruch 4, wobei das planare Element (37) mit einem Paar gegenüberliegender Verlängerungen (38) versehen ist, die sich von gegenüberliegenden Enden des planaren Elements (37) in einem stumpfen Winkel dazu erstrecken, um die gegenüberliegenden Endflächen des Behälters zu berühren und dadurch das planare Element (37) innerhalb des Behälters (30) am Platz zu halten.

6. Doppelseitige Anzeigekonstruktion nach Anspruch 3, wobei der Behälter (21) im Wesentlichen kubisch oder quaderförmig ist und ein Paar Endflächen (22) das Paar gegenüberliegende lichtemittierende Flächen bildet und wobei ein Paar Seitenflächen (23) das Paar gegenüberliegende lichtempfangende Flächen bildet und sich das planare Element (26) innerhalb des Behälters (21) in einem schiefen Winkel sowohl zu den Endflächen als auch zu den Seitenflächen des Behälters (21) erstreckt.

7. Doppelseitige Anzeigekonstruktion nach Anspruch 3, wobei das lichtdurchlässige Element aus einem Paar von Behältern (18, 19) mit einer im Wesentlichen prismenartigen Form gebildet ist, wobei jeder eine schräge Fläche aufweist, die im Wesentlichen benachbart zueinander angeordnet ist und eine Luftschicht dazwischen aufweist, die die lichtreflektierende Schicht bereitstellt.

8. Doppelseitige Anzeigekonstruktion nach Anspruch 2, wobei das lichtdurchlässige Element (5) aus einem festen lichtdurchlässigen Material gebildet ist und in zwei Teilen mit im Wesentlichen prismenartiger Form gebildet ist, wobei jeder eine schiefe Fläche aufweist, die im Wesentlichen benachbart zueinander angeordnet ist und eine Luftschicht dazwischen aufweist, die die lichtreflektierende Schicht bereitstellt, wobei die beiden Teile wahlweise als rechtwinklige Dreiecksprismen gebildet sind.

9. Doppelseitige Anzeigekonstruktion nach einem der vorhergehenden Ansprüche, die des Weiteren einen Halter (4) zur Befestigung des Paars von lichtemittierenden Anzeigen (14, 14') benachbart zu einer jeweiligen lichtempfangenden Fläche umfasst, wobei der Halter (4) im Wesentlichen lichtundurchlässig ist, um die lichtemittierenden Anzeigen (14, 14') und die lichtempfangenden Flächen (8, 8') des lichtübertragenden Elements zu verbergen.

10. Doppelseitige Anzeigekonstruktion nach Anspruch 9, wobei der Halter (4) ein Paar beabstandete Befestigungselemente (2, 3) umfasst, wobei jedes Element eine der lichtemittierenden Anzeigen (14, 14') und eine der lichtempfangenden Flächen (8, 8') aufweist, wobei sich das lichtdurchlässige Element (5) zwischen den beabstandeten Befestigungselementen (2, 3) so erstreckt, dass die lichtemittierenden Flächen (8, 8') für Betrachter zwischen den beabstandeten Befestigungselementen sichtbar sind.

11. Doppelseitige Anzeigekonstruktion nach Anspruch 9, wobei der Halter ein ringförmiges Befestigungselement (43) umfasst, wobei die lichtemittierenden Anzeigen (40) und die lichtempfangenden Flächen darin verborgen sind, jedoch die lichtemittierenden Flächen des lichtdurchlässigen Elements durch die Mitte des ringförmigen Befestigungselements sichtbar sind, so dass die lichtemittierenden Flächen für Betrachter sichtbar sind.

12. Doppelseitige Anzeigekonstruktion nach einem der vorhergehenden Ansprüche, wobei die Bilder, die von dem Paar lichtemittierender Anzeigen (14, 14') angezeigt werden, unterschiedlich sind und eines dieser Bilder für einen Betrachter sichtbar ist, der auf eine der lichtemittierenden Flächen (9, 9') schaut und das andere dieser Bilder für einen Betrachter sichtbar ist, der auf die andere der lichtemittierenden Flächen schaut.

13. Doppelseitige Anzeigekonstruktion nach einem der vorhergehenden Ansprüche, die eine Vielzahl der lichtdurchlässigen Elemente (18, 19) umfasst, die vertikal nebeneinander angebracht sind, wobei eine Vielzahl von Paaren von lichtemittierenden Anzeigen (20) benachbart zu den lichtempfangenden Flächen der Vielzahl der lichtdurchlässigen Elemente angeordnet ist.

14. Doppelseitige Anzeigekonstruktion nach einem der vorhergehenden Ansprüche, die des Weiteren eine Lichtbaugruppe umfasst, die so angeordnet ist, dass sie Licht in das lichtdurchlässige Element strahlt.

15. Werbeschild, das eine doppelseitige Anzeigekonstruktion nach einem der vorhergehenden Ansprüche umfasst.

## Revendications

1. Structure d'affichage double face comprenant :
un élément transmettant la lumière (5) comprenant un matériau transmettant la lumière, l'élément transmettant la lumière (5) comportant une paire de faces réceptrices de lumière opposées (8, 8') et une paire de faces émettrices de lumière opposées (9, 9') disposées de façon sensiblement orthogonale aux faces réceptrices de lumière (8, 8') ;
une couche réfléchissant la lumière (10, 10') disposée à un angle oblique par rapport aux faces réceptrices de lumière (8, 8') et aux faces émettrices de lumière (9, 9') ; **caractérisée par**
une paire d'affichages émetteurs de lumière (14, 14') pour l'affichage d'images fixes et/ou animées, identiques ou différentes, et montés de telle sorte qu'une image émise par un affichage émetteur de lumière respectif (14, 14') parvienne à une face réceptrice de lumière respective (8, 8') et soit transmise par l'intermédiaire de l'élément transmettant la lumière (5) pour être réfléchie par la couche réfléchissant la lumière (10, 10') et ainsi envoyée à une face émettrice de lumière respective (9, 9'),
les images reçues au niveau de la paire de faces réceptrices de lumière opposées (8, 8') étant ainsi visibles par des observateurs par l'intermédiaire de la paire de faces émettrices de lumière opposées (9, 9') de la structure d'affichage.

2. Structure d'affichage double face selon la revendication 1, dans laquelle le matériau transmettant la lumière (5) a un premier indice de réfraction et la couche réfléchissant la lumière (10, 10') a un deuxième indice de réfraction différent du premier indice de réfraction, et la différence entre les premier et deuxième indices de réfraction et l'angle oblique sont suffisants pour causer une réflexion importante des images par la couche réfléchissant la lumière (10, 10').

3. Structure d'affichage double face selon la revendication 2, dans laquelle le matériau transmettant la lumière (5) est un premier milieu fluide et la couche réfléchissant la lumière (10, 10') comprend un deuxième milieu fluide, différent du premier milieu fluide, éventuellement dans laquelle le premier milieu fluide comprend un liquide, tel que l'eau ou l'huile, par exemple une huile de silicone, à l'intérieur d'un réservoir (18, 19) formé d'un matériau solide, transmettant la lumière, tel qu'un matériau en verre ou en plastique, et en outre éventuellement dans laquelle le deuxième milieu fluide comprend un gaz, tel que l'air, renfermé dans un élément sensiblement plat formé d'une paire de parois hermétiquement jointes l'une à l'autre à leur périphérie et formées d'un matériau solide, transmettant la lumière, tel qu'un matériau en verre ou en plastique.

4. Structure d'affichage double face selon la revendication 3, dans laquelle le réservoir (30) est sensiblement cylindrique, avec une paire de faces d'extrémité (32) formant la paire de faces émettrices de lumière opposées, et des parties opposées de la périphérie courbe formant la paire de faces réceptrices de lumière opposées, l'élément plat (37) s'étendant à l'intérieur du réservoir (30) à un angle oblique par rapport aux deux faces d'extrémité (32) du réservoir et aux parties courbes opposées de la périphérie.

5. Structure d'affichage double face selon la revendication 4, dans laquelle l'élément plat (37) est pourvu d'une paire de prolongements opposés (38) s'étendant à partir d'extrémités opposées de l'élément plat (37) à un angle obtus par rapport à celles-ci de façon à entrer en contact avec les faces d'extrémité opposées du réservoir et à maintenir ainsi l'élément plat (37) en place à l'intérieur du réservoir (30).

6. Structure d'affichage double face selon la revendication 3, dans laquelle le réservoir (21) est sensiblement cubique ou cuboïde, avec une paire de faces d'extrémité (22) formant la paire de faces émettrices de lumière opposées, et une paire de faces latérales (23) formant la paire de faces réceptrices de lumière opposées, l'élément plat (26) s'étendant à l'intérieur du réservoir (21) à un angle oblique par rapport aux faces d'extrémité ainsi qu'aux faces latérales du réservoir (21).

7. Structure d'affichage double face selon la revendication 3, dans laquelle l'élément transmettant la lumière est formé d'une paire de réservoirs (18, 19) de forme sensiblement similaire à des prismes, chacun comportant une face oblique, sensiblement adjacents l'un à l'autre, avec une couche d'air entre ceux-ci formant la couche réfléchissant la lumière.

8. Structure d'affichage double face selon la revendication 2, dans laquelle l'élément transmettant la lumière (5) est formé d'un matériau solide transmettant la lumière et est formé en deux parties de forme sensiblement similaire à des prismes, chacune comportant une face oblique, sensiblement adjacentes l'une à l'autre, avec une couche d'air entre celles-ci formant la couche réfléchissant la lumière, éventuellement dans laquelle les deux parties sont sous forme de prismes triangulaires à angle droit.

9. Structure d'affichage double face selon l'une quelconque des revendications précédentes, comprenant en outre un support (4) pour le montage de la paire d'affichages émetteurs de lumière (14, 14') de façon adjacente à une face réceptrice de lumière respective, le support (4) étant généralement opaque de façon à cacher les affichages émetteurs de lumière (14, 14') et les faces réceptrices de lumière (8, 8') de l'élément transmettant la lumière.

10. Structure d'affichage double face selon la revendication 9, dans laquelle le support (4) comprend une paire d'éléments de montage espacés (2, 3), chaque élément contenant un des affichages émetteurs de lumière (14, 14') et une des faces réceptrices de lumière (8, 8'), l'élément transmettant la lumière (5) s'étendant ainsi entre les éléments de montage espacés (2, 3) de telle sorte que les faces émettrices de lumière (8, 8') puissent être visualisées par des observateurs entre les éléments de montage espacés.

11. Structure d'affichage double face selon la revendication 9, dans laquelle le support comprend un élément de montage annulaire (43) dans lequel sont cachés les affichages émetteurs de lumière (40) et les faces réceptrices de lumière, les faces émettrices de lumière de l'élément transmettant la lumière étant toutefois visibles à travers le centre de l'élément de montage annulaire, de telle sorte que les faces émettrices de lumière puissent être visualisées par des observateurs.

12. Structure d'affichage double face selon l'une quelconque des revendications précédentes, dans laquelle les images affichées par la paire d'affichages émetteurs de lumière (14, 14',) sont différentes, une de ces images étant visible par un observateur regardant une des faces émettrices de lumière (9, 9') et l'autre de ces images étant visible par un observateur regardant l'autre des faces émettrices de lumière.

13. Structure d'affichage double face selon l'une quelconque des revendications précédentes, comprenant une pluralité desdits éléments transmettant la lumière (18, 19) montés verticalement l'un à côté de l'autre, une pluralité de paires d'affichages émetteurs de lumière (20) étant disposée de façon adjacente aux faces réceptrices de lumière de la pluralité d'éléments transmettant la lumière.

14. Structure d'affichage double face selon l'une quelconque des revendications précédentes, comprenant en outre un ensemble d'éclairage configuré pour envoyer de la lumière dans l'élément transmettant la lumière.

15. Panneau publicitaire comprenant une structure d'affichage double face selon l'une quelconque des revendications précédentes.
